Europäisches Patentamt

European Patent Office

Office européen des brevets

(11) Publication number: **0 212 656**
A1

## (12) EUROPEAN PATENT APPLICATION

(21) Application number: 86111782.8

(51) Int. Cl.⁴: **B29C 65/16** , B23K 26/00

(22) Date of filing: 26.08.86

(30) Priority: 29.08.85 JP 190189/85

(43) Date of publication of application:
04.03.87 Bulletin 87/10

(84) Designated Contracting States:
DE GB

(71) Applicant: TOYOTA JIDOSHA KABUSHIKI
KAISHA
1, Toyota-cho Toyota-shi
Aichi-ken 471(JP)

(72) Inventor: Nakamata, Hideo
c/o Toyota Jidosha K.K. 1, Toyota-cho
Toyota-shi Aichi-ken(JP)

(74) Representative: Bühling, Gerhard, Dipl.-Chem.
et al
Patentanwaltsbüro Tiedtke-Bühling-Kinne
Grupe-Pellmann-Grams-Struif Bavariaring 4
D-8000 München 2(DE)

(54) Method for joining plasics material to dissimilar material.

(57) A plastics material (1) and a dissimilar material - (2) placed thereon are joined the each other by applying a laser beam to the former through an opening (3) or hole made in the latter. The laser beam is introduced through a probe (5), e.g. a glass probe, which is pressed against the plastics material as it is melted, so that the melt is forced out of the hole. After the retraction of the probe, the melt solidifies to achieve joining.

*FIG. 1 (b)*

EP 0 212 656 A1

Xerox Copy Centre

# METHOD FOR JOINING PALSTIC MATERIAL TO DISSIMILAR MATERIAL

## BACKGROUND OF THE INVENTION

Field of the Invention:

The present invention relates to a method for joining plastics material, e.g., a synthetic resin material, to a dissimilar material placed thereon by the application of a laser beam.

Description of the Prior Art:

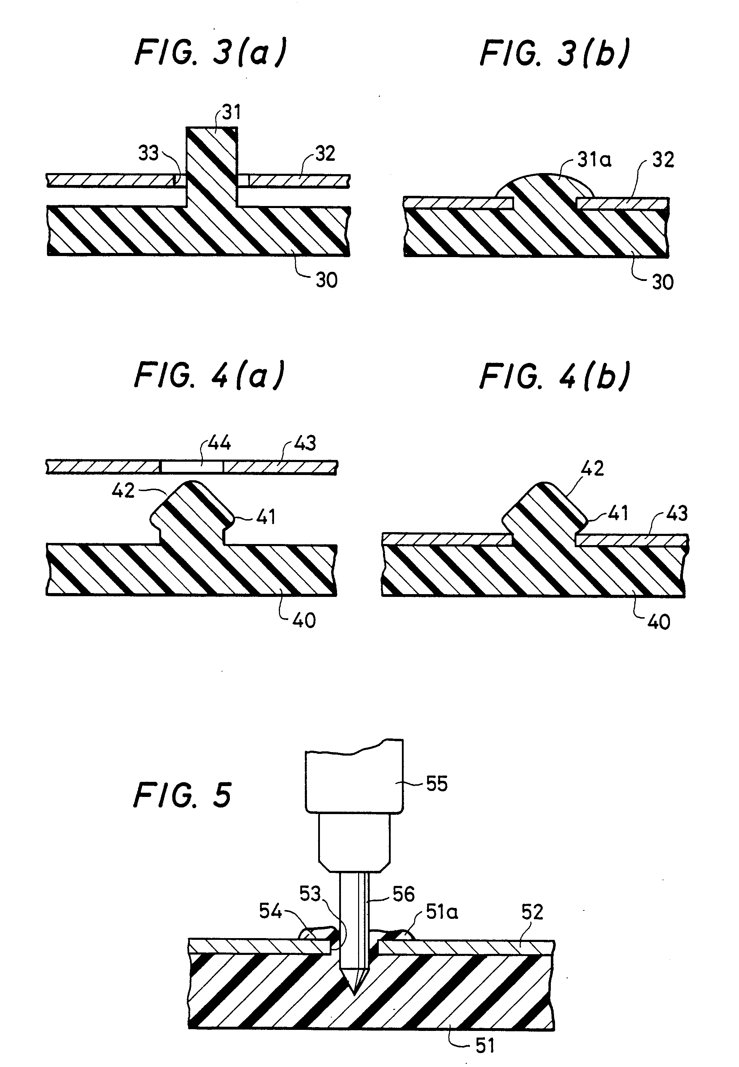

Heretofore, the mechanical joining methods as shown in Figs. 3 and 4 (sectional views) were generally used to join a plastics material to a dissimilar material such as a metal.

In Figs. 3(a) and 3(b), there are shown plastics material 30 and a projection 31 for joining which is formed on plastics material 30 at the time of molding. This projection is inserted into an opening or hole 33 formed, e.g., bored through metal material 32 to which the plastics material is joined. When the two materials 30 and 32 are to be joined to each other, they are placed one over the other, with projection 31 on plastics material 30 inserted into hole 33 in metal material 32, and projection 31 on plastics material 30 is melted by an appropriate heating means such as a soldering iron, high frequency heating means, and ultrasonic heating means (not shown) so that melt 31a covers the periphery of hole 33 in metal material 32.

In Figs. 4(a) and 4(b), there are shown plastics material 40 and metal material 43 to be joined to each other. The plastics material is provided with a projection 42 having a barb 41 which is formed simultaneously with the molding of the plastics material. The metal material 43, which is a mating part, has an opening or hole 44. When the two materials are to be joined to each other, metal material 43 is placed over plastics material 40, with hole 44 in metal material 43 just above projection 42 on plastics material 40, as shown in Fig. 4(a). Subsequently, projection 42 on plastics material 40 is forced into hole 44 in metal material 43, so that barb 41 holds the two materials 40 and 43 together securely, as shown in Fig. 4(b).

These mechanical joining methods, however, have a disadvantage in that it is necessary to form projections 31 and 42 when plastics materials 30 and 40 are molded. The molding of these projections necessitates the use of a complex mold. In addition, in the case of a rupture of the joint, repair is possible only with an adhesive.

To overcome these disadvantages, a mechanical joining method as shown in Fig. 5 is generally used. In Fig. 5, there is shown a 5 mm thick plate 51 made of styrene-acrylonitrile copolymer, and there is also shown an 0.8 mm thick metal plate 52 placed on plate 51. The metal plate has an opening or hole 53 therein. Joining of the two plates 51 and 52 is accomplished as follows. Heating tip 56 - (heated with about 20 W) of soldering iron 55 is pressed, through hole 53 in metal plate 52, against plastic plate 51, so that the surface of the plastic plate is melted. As heating tip 56 of soldering iron 55 is forced in, melt 51a of plastic plate 51 is forced out through the gap between the heating tip and the hole until periphery 54 of hole 53 is covered with melt 51a. Finally, heating tip 56 of soldering iron 55 is removed from plastic plate 51. Melt 51a solidifies and the two plates 51 and 52 are joined together.

This mechanical joining method, however, has a disadvantage in that the melt of the plastic tends to stick or adhere to heating tip 56 when the soldering iron 55 is removed because heating tip 56 is brought into direct contact with plate 51 for heating and melting. This leads to poor joining and makes it necessary to remove melt 51a which adheres to heating tip 56 each time when joining is carried out.

## SUMMARY OF THE INVENTION

Accordingly, it is an object of the invention to provide an improved method for joining a plastics material to a dissimilar material which eliminates the above-mentioned disadvantages. It is another object of the invention to provide a method for joining a plastics material to a dissimilar material by applying a laser beam to the former for heating and melting.

Additional objects and advantages of the present invention will be set forth in part in the description that follows and in part will be obvious from the description or may be learned by practice of the invention. The objects and advantages of the invention may be realized and obtained by the method particularly pointed out in the appended claims.

The joining method of this invention provides a secure joint and obviates the removal of unnecessary melt.

To achieve the above objects and in accordance with the purpose of the invention as embodied and broadly described herein, the method of this invention resides in the joining of a plastics material capable of absorbing a laser beam to a dissimilar material placed thereon and comprises applying a laser beam through a probe, e.g. a glass probe, to the surface of the plastics material, e.g. from above, through an opening in the dissimilar material, thereby melting the plastics material, and pressing said probe against the resultant melt, thereby forcing the melt through and out of the opening in the dissimilar material.

The dissimilar material placed on the plastics material may be any material different from the plastics material. It includes metal materials such as iron, copper, zinc, brass aluminum and stainless steel. It also includes conventional ceramics such as glass, enamel, refractory and cement, and new ceramics such as alumina, zirconia, cordierite, nitrides, carbides and borides.

The plastics material placed under the dissimilar material may be any material that absorbs a laser beam. The material includes, for example, plastics such as polyethylene resin, polypropylene resin and styrene-acrylonitrile copolymer each having incorporated therein from 0.3 to 0.7 wt% of auxiliary material such as carbon black. The material also includes glass fiber reinforced plastics such as polyethylene resin, polypropylene resin and styrene-acrylonitrile copolymer each having incorporated therein from 0.3 to 0.7 wt% of auxiliary material such as carbon black.

The combination of the two materials to be joined may be selected from the foregoing materials without any restriction.

The laser which can be used for joining includes, for example, a glass-neodymium$^{3+}$ laser, a YAG (yttrium aluminum garnet)-neodymium$^{3+}$ laser, a ruby laser, a helium-neon laser, a krypton laser, an argon laser, a hydrogen laser and a nitrogen laser. The glass-neodymium$^{3+}$ and YAG-neodymium$^{3+}$ lasers are preferred.

The laser beam employed for joining should have a proper wavelength, preferably shorter than 1.06 $\mu$m. When a wavelength longer than 1.06 $\mu$m is used, the laser beam may not heat and melt the plastics material. In addition, the laser should have a proper output in the range of 5 W to 100 W, preferably 5 W to 30 W. With an output below 5 W, the laser beam takes a long time to heat and melt and plastics material. With an output in excess of 100 W, the laser may cause the plastics material to evaporate or deteriorate, leading to a poor joint.

The accompanying drawings, which are incorporated in and constitute a part of this specification, illustrate embodiments of the invention and, together with the description, serve to explain the principles of the invention.

## BRIEF DESCRIPTION OF THE DRAWINGS

Figs. 1(a) to 1(d) are schematic sectional views illustrating one example of the method of the present invention for joining a plastics material to a dissimilar material.

Figs. 2(a) to 2(d) are schematic sectional views illustrating another example of the method of the present invention for joining a plastics material to a dissimilar material.

Figs. 3(a) and 3(b), Figs. 4(a) and 4(b), and Fig. 5 are schematic sectional views illustrating conventional methods for joining a plastics material to a dissimilar material.

## DETAILED DESCRIPTION OF THE PREFERRED EMBODIMENTS

Reference will now be made in detail to presently preferred embodiments of the invention, examples of which are illustrated in the accompanying drawings. Throughout the drawings, like reference characters are used to designate like elements.

### Example 1

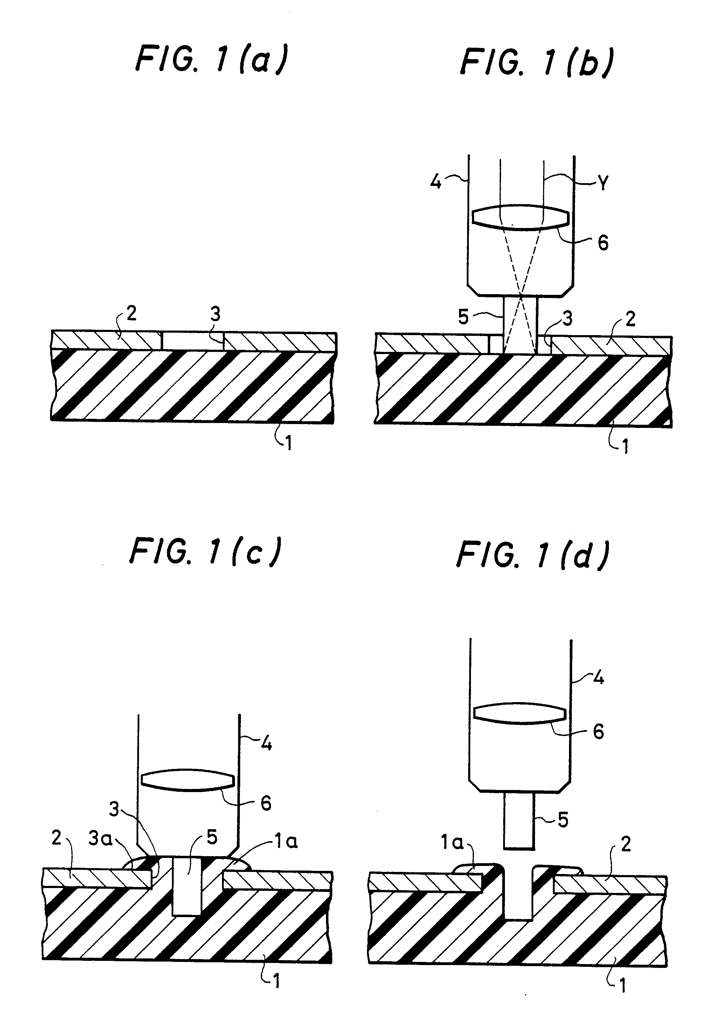

In Figs. 1(a) and 1(b), there is shown a 5 mm thick plate 1 of styrene-acrylonitrile copolymer reinforced with glass fiber. The copolymer assumes a black color because it contains 0.5 wt% of carbon black therein so that it absorbs a laser beam having a wavelength shorter than 1.06 $\mu$m.

On plastics plate 1 is placed an 0.8 mm thick steel plate 2 having opening 3 about 5 mm in diameter.

The emitting nozzle of a YAG-neodymium$^{3+}$ laser apparatus is provided with a cylindrical probe 5 made of quartz glass. This cylindrical probe is 3 mm in diameter, slightly smaller than the diameter of hole 3 bored through the steel plate. Probe 5 made of quartz glass permits the transmission of the YAG laser beam Y having a wavelength of 1.06 $\mu$m.

The joining of the two plates 1 and 2 placed one over the other as shown in Fig. 1(a) is accomplished as follows. Probe 5 extending from emitting nozzle 4 is inserted from above into opening 3 bored through steel plate 2 so that the tip of the probe comes into contact with plate 1 of styrene-acrylonitrile copolymer. A laser beam Y (output: 20 W, wavelength: 1.06 $\mu$m) generated by the YAG-neodymium$^{3+}$ laser apparatus is applied through the emitting nozzle and a condenser lens 6 attached thereto. The laser beam passes through probe 5 and reaches the surface of the styrene-acrylonitrile copolymer plate 1. Laser beam Y accumulates energy that heats and melts the surface of plate 1. When plate 1 is melted by the laser beam to a desired extent, probe 5 is pressed against the molten part as shown as Fig. 1(c). Probe 5 forces melt 1a of plate 1 out of the gap between plate 2 and hole 3 to such an extent that periphery 3a of hole 3 is covered with melt 1a. Application of the laser beam Y is suspended, and probe 5 is retracted upward as shown in Fig. 1(d). Being made of quartz glass, probe 5 can be easily retracted without sticking or adherence of melt 1a. Finally, melt 1a covering periphery 3a of hole 3 solidifies, completing the secure joining of plate 1 of styrene-acrylonitrile copolymer and steel plate 2.

Example 2

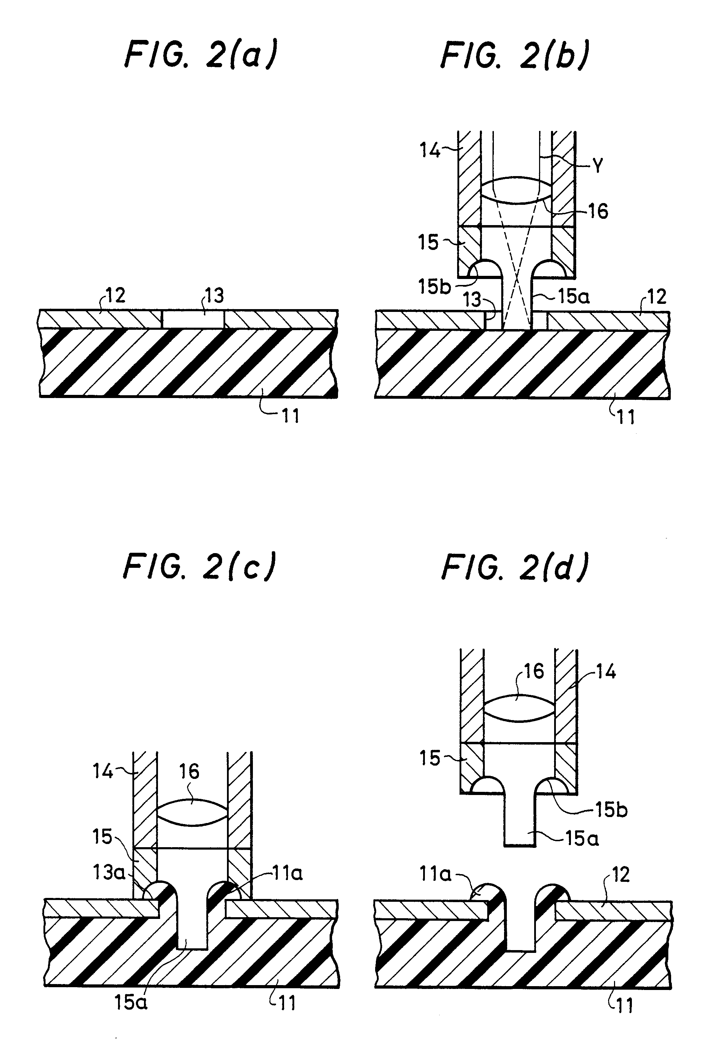

In Figs. 2(a) and 2(b), there is shown a 5 mm thick plate 11 of propropylene resin which assumes a black color because it contains 0.6 wt% of carbon black so that it absorbs a laser beam having a wavelength shorter than 1.06 μm.

On plastics plate 11 is placed a 1.2 mm thick plate 12 of a nitride ceramic having therein an opening or hole 13 about 5 mm in diameter.

The emitting nozzle of a YAG-neodymium$^{3+}$ laser apparatus is provided with a probe 15 made of high-silica glass. Probe 15 has a cylindrical projection 15a 3 mm in diameter, slightly smaller than the diameter of hole 13 bored through ceramics plate 12. The root of projection 15a is surrounded by a hemitoroidal groove 15b which is large enough to cover periphery 13a of hole 13 bored through plate 12. Probe 15 made of high-silica glass permits the transmission of YAG laser beam Y having a wavelength of 1.06 μm.

The joining of the two plates 11 and 12 placed one over the other as shown in Fig. 2(a) is accomplished as follows. Projection 15a of probe 15 is inserted from above into hole 13 bored through ceramics plate 12 so that the tip of the probe projection comes into contact with plate 11 of polypropylene resin. A laser beam Y (output: 20 W, wavelength: 1.06 μm) generated by the YAG-neodymium$^{3+}$ laser apparatus is applied through condenser lens 16. The laser beam passes through projection 15a of probe 15 and reaches the surface of plate 11 of polypropylene resin. Laser beam Y accumulates energy that heats and melts the surface of plate 11. When plate 11 is melted by the laser beam to a desired extent, the projection of probe 15 is pressed against the molten part as shown in Fig. 2(c). Projection 15a forces melt 11a of plate 11 out of the gap between plate 12 and hole 13. Melt 11a is forced down by hemitoroidal groove 15b so that the periphery 13a of hole 13 is covered with melt 11a. Application of the laser beam Y is suspended, and emitting nozzle 14 is retracted upward as shown in Fig. 2(d). Being made of high-silica glass, probe 15 can be easily retracted without melt 11a sticking thereto. Finally, hemitoroidal melt 11a covering periphery 13a of hole 13 solidifies, completing the secure joining of plate 11 of polypropylene resin and ceramic plate 12.

According to the present invention, the joining of a plastics material to a dissimilar material is accomplished by applying a laser beam to the plastics material through an opening or hole bored in the dissimilar material placed on the former. The laser beam is introduced through a probe, e.g. a probe made of glass. During application of the laser beam, the probe is pressed against the plastics material so that the molten part of the plastics material is forced out. The molten part solidifies to achieve joining. A probe made of glass can be easily retracted without the melt sticking to the probe. This eliminates the necessity of cleaning the probe each time the joining operation is performed. The application of a laser beam melts the plastics material faster than a soldering iron which has been used in conventional joining operations. This leads to an efficient joining operation. The hole formed after retraction of the probe can be utilized as an unthreaded hole for a self-tapping screw or machine screw, in the event that the joining fails and needs repair.

**Claims**

1. A method of joining a plastics material capable of absorbing a laser beam to a dissimilar material placed thereon which comprises applying a laser beam through a probe to the surface of the plastics material through an opening in the dissimilar material to melt the plastics material, and pressing said probe against the resultant melt to force the melt through said opening in the dissimilar material.

2. The method as set forth in claim 1 wherein said probe is a glass probe.

3. The method as set forth in claim 1 wherein the dissimilar material is a metal or a ceramic.

4. The method as set forth in claim 3 wherein the metal is selected from iron, copper, zinc, brass, aluminum and stainless steel.

5. The method as set forth in claim 3 wherein the ceramic is selected from glass, enamel, refractory, cement, alumina, zirconia cordierite, nitrides, carbides and borides.

6. The method as set forth in claim 3 wherein the dissimilar material is steel or a nitride ceramic.

7. The method as set forth in claim 1 wherein the plastics material is at least one member selected from polyethylene, polypropylene and styrene-acrylonitrile copolymer, said plastics material containing from 0.3 to 0.7 wt% of an auxiliary material to aid in absorption of a laser beam.

8. The method set forth in claim 7 wherein said auxiliary material is carbon black.

9. The method set forth in claim 8 wherein said plastics material is glass fiber reinforced.

10. The method set forth in claim 7 wherein said plastics material is glass fiber reinforced.

11. The method as set forth in claim 1 wherein the plastics material is glass fiber reinforced styrene-acrylonitrile copolymer containing 0.5 wt% of carbon black.

12. The method as set forth in claim 1 wherein the plastics material is polypropylene containing 0.6 wt% of carbon black.

13. The method as set forth in claim 1 wherein the laser beam is provided by a laser selected from a glass-neodymium³⁺ laser, a YAG-neodymium³⁺ laser, a ruby laser, a helium-neon laser, a krypton laser, an argon laser, a hydrogen laser and a nitrogen laser.

14. The method as set forth in claim 1 wherein the laser beam is provided by a YAT-neodymium³⁺ laser or a glass-neodymium³⁺ laser.

15. The method as set forth in claim 14, wherein the laser beam is provided by a YAG-neodymium³⁺ laser.

16. The method as set forth in claim 14, wherein the laser beam has a wavelength shorter than 1.06 μm.

17. The method as set forth in claim 1 wherein the laser beam has a wavelength shorter than 1.06 μm.

18. The method as set forth in claim 17 wherein the laser has an output of 5 W to 100 W.

19. The method as set forth in claim 18 wherein the laser has an output of 5 W to 30 W.

20. The method as set forth in claim 1 wherein the probe is a quartz glass probe or a high-silica glass probe.

21. The method as set forth in claim 1 wherein the probe is of cylindrical shape.

22. The method as set forth in claim 1 wherein the opening in the dissimilar material is round.

# FIG. 1 (a)

# FIG. 1 (b)

# FIG. 1 (c)

# FIG. 1 (d)

# FIG. 2(a)

# FIG. 2(b)

# FIG. 2(c)

# FIG. 2(d)

## FIG. 3(a)

## FIG. 3(b)

## FIG. 4(a)

## FIG. 4(b)

## FIG. 5

| | DOCUMENTS CONSIDERED TO BE RELEVANT | | EP 86111782.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | US - A - 4 106 962 (ADAMS) <br> * Totality * | 1,22 | B 29 C 65/16 <br> B 23 K 26/00 |
| A | | 2-4,6 | |
| | -- | | |
| Y | US - AS - 3 560 291 (FOGLIA) <br> * Totality * | 1,22 | |
| A | | 7,12- 17 | |
| | -- | | |
| X,P | EP - A2 - 0 159 170 (TOYOTA) <br> * Totality * | 1,2,4, 6-22 | |
| | -- | | |
| A | US - A - 4 069 080 (OSBORNE) <br> * Totality * | | TECHNICAL FIELDS SEARCHED (Int. Cl.4) |
| | -- | | |
| A | US - A - 4 414 166 (CHARLESON) <br> * Totality * | | B 29 C <br> B 23 K |
| | ---- | | |

The present search report has been drawn up for all claims

| Place of search | Date of completion of the search | Examiner |
|---|---|---|
| VIENNA | 19-11-1986 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82